# EUROPEAN PATENT APPLICATION

(11) **EP 3 721 969 A1**
(43) Date of publication of application: **14.10.2020**
(21) Application number: 19212593.8
(22) Date of filing: 29.11.2019
(51) Int. Cl.: B01D 53/18

(54) **FILTRATION STRUCTURE FOR CARBON DIOXIDE SCRUBBER**

(30) Priority: 12.04.2019 US 201916382646
(71) Applicant: Hamilton Sundstrand Corporation, Charlotte, NC 28217-4578 (US)
(72) Inventor: FILBURN, Thomas P., Granby, CT Connecticut 06035 (US); HUGENER, Theresa A., Coventry, CT Connecticut 06238 (US); WALSH, Peter J., Wethersfield, CT Connecticut 06109 (US); RANZ, Holden T., Hartford, CT Connecticut 06106 (US)
(74) Representative: Dehns

(57) **Abstract**

Disclosed is a filtration structure, comprising: a substrate (12), wherein the substrate is a three-dimensional lattice formed from repeating geometric shapes (14); a layer of porous material (24) bonded over the substrate; and a liquid amine retained within the pores of the porous material. Also disclosed is a carbon dioxide scrubber comprising the filtration structure.

## Description

### BACKGROUND

Exemplary embodiments pertain to the art of filtration structures, more particularly, to filtration structures for use in carbon dioxide scrubbers.

A carbon dioxide scrubber is a piece of equipment that absorbs carbon dioxide. For example, scrubbers are used to treat exhaust gases from industrial plants or from exhaled air in life support systems such as rebreathers or in spacecraft, submersible craft or airtight chambers. Carbon dioxide scrubbers are also used in controlled atmosphere storage. They are also being considered for carbon capture as a means of combating global warming.

An important application for carbon dioxide scrubbing is the removal of carbon dioxide from power plant exhaust. For example, the power plant can be powered by coal, gas and other organic fuel sources such as recycled waste and plant matter. Scrubbers in this context often involve the use of various amines. Cold solutions of these organic compounds bind carbon dioxide, thus facilitating its filtration. However, this scrubber technology has not been implemented on a large scale due to its poor efficiency and large capital costs for both installation and operation.

Therefore, there is a need to develop a filtration structure for use in carbon dioxide scrubbers which improves thermal linkage, ventilation, and overall efficiency, increases contact surface area and cyclic capacity, and reduces pressure drop, power usage, total structural mass, and vacuum desorption pressures.

### BRIEF DESCRIPTION

Disclosed is a filtration structure, comprising: a substrate, wherein the substrate is a three-dimensional lattice formed from repeating geometric shapes; a layer of porous material bonded over the substrate; and a liquid amine retained within the pores of the porous material.

Also disclosed is a carbon dioxide scrubber comprising the filtration structure.

### BRIEF DESCRIPTION OF THE DRAWINGS

The following descriptions should not be considered limiting in any way. With reference to the accompanying drawings, like elements are numbered alike:
FIG. 1 is a simplified schematic diagram representing a filtration structure according to an exemplary embodiment.
FIG. 2 is a zoomed-in view of Portion A of the filtration structure of FIG. 1 according to an exemplary embodiment.
FIG. 3 is a zoomed-in view of Portion B of the filtration structure of FIG. 2 according to an exemplary embodiment.
FIG. 4 is a simplified schematic diagram representing a filtration structure according to an exemplary embodiment.
FIG. 5 is a simplified schematic diagram representing a carbon dioxide scrubber comprising a filtration structure according to an exemplary embodiment.

### DETAILED DESCRIPTION

A detailed description of one or more embodiments of the disclosed apparatus and method are presented herein by way of exemplification and not limitation with reference to the Figures.

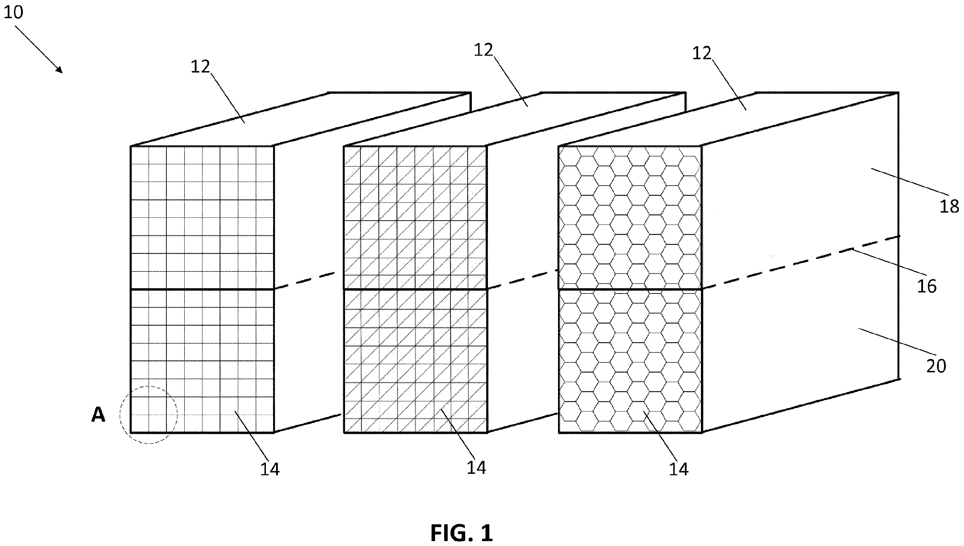

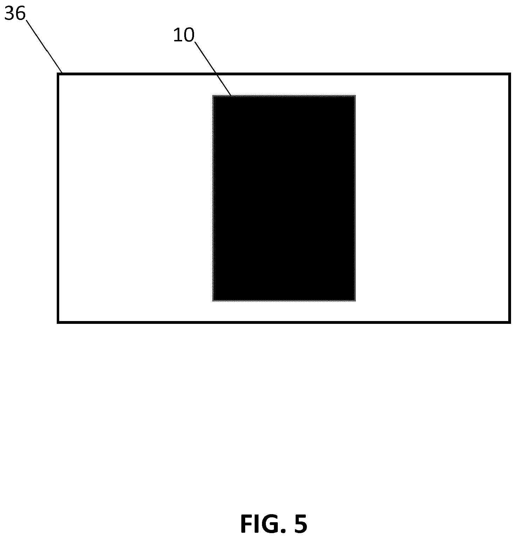

Referring to FIGS. 1-5, a filtration structure 10 comprises a substrate 12. For example, the substrate 12 can be a three-dimensional lattice formed from repeating geometric shapes 14. For example, the substrate 12 can be a single monolithic structure. For example, the substrate 12 can be formed via extrusion.

The substrate 12 can comprise a conductive material. For example, the substrate 12 can comprise aluminum, aluminum alloy, copper, copper alloy, silver, gold, stainless steel, or combinations thereof. The repeating geometric shapes 14 of the substrate 12 can be, for example, polyhedral, rectangular, elliptical, triangular, annular, honeycombs, or combinations thereof.

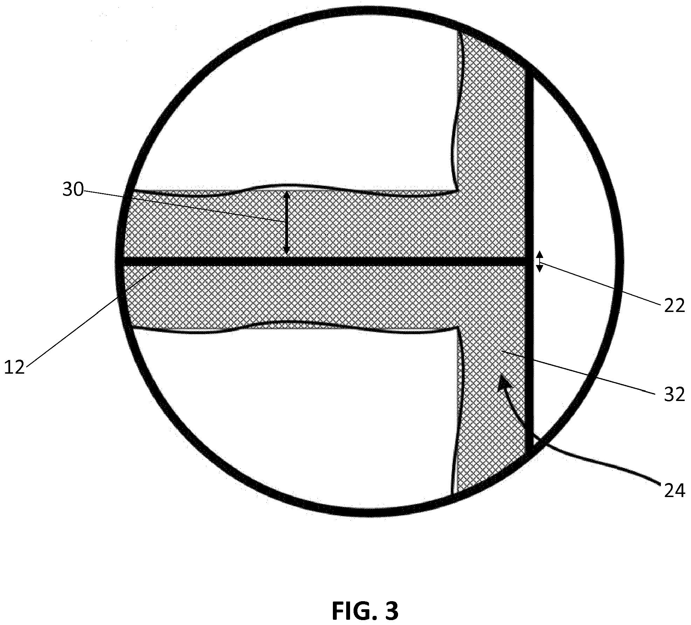

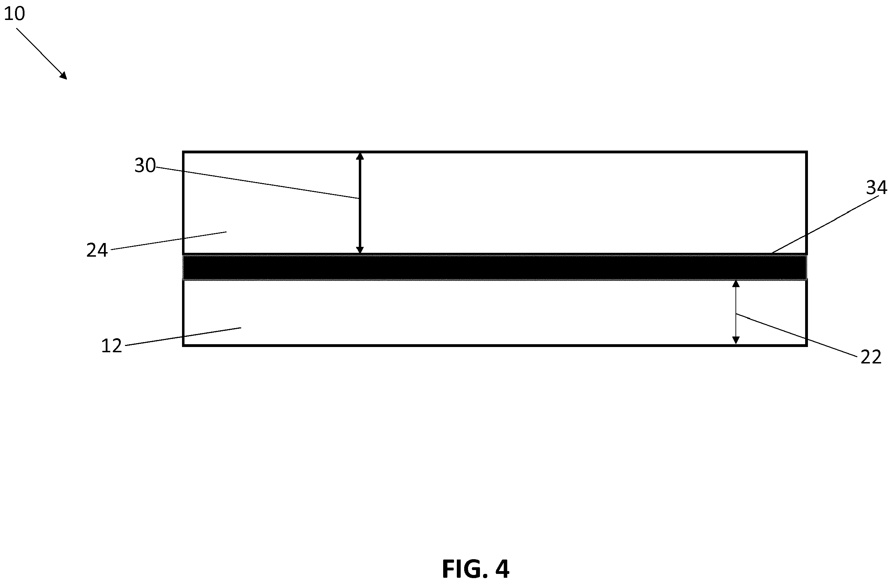

A thickness 22 of the substrate 12 can be about 0.025 millimeters to about 0.25 millimeters (about 0.001 inches to about 0.01 inches), for example, about 0.05 millimeters to about 0.18 millimeters (about 0.002 inches to about 0.007 inches), for example, about 0.05 millimeters to about 0.13 millimeters (about 0.002 inches to about 0.005 inches) (FIGS. 3 and 4).

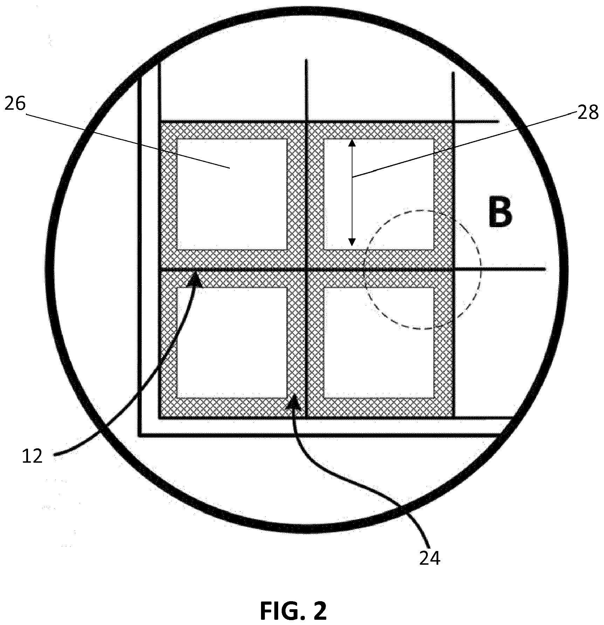

The substrate 12 can comprise passages 26 for fluid flow (FIG. 2). For example, gas, liquid, or a combination thereof, can flow through the open cell structure of the lattice. A diameter 28 of the passages 26 for fluid flow can be about 0.1 millimeters to about 1 millimeters (about 0.004 inches to about 0.04 inches), for example, about 0.55 millimeters to about 0.65 millimeters (about 0.022 inches to about 0.026 inches), for example, about 0.61 millimeters (about 0.024 inches).

The substrate 12 can further comprise a parting sheet 16 which, for example, partitions the filtration structure 10 into two or more beds (18, 20). For example, the parting sheet 16 can comprise metal, plastic, ceramic, a composite material, or combinations thereof.

A layer of porous material 24 can be bonded over the substrate 12. For example, the layer of porous material 24 can comprise polymer, silica gel, alumina, zeolites, carbon, or combinations thereof. For example, the layer of porous material 24 can comprise polytetrafluoroethylene, polyvinylidene fluoride, polyethersulphone, poly (methyl methacrylate), polystyrene, polyethylene, pyrolyzed polyacrylonitrile, or combinations thereof.

A thickness 30 of the layer of porous material 24 can be about 0.01 millimeters to about 2 millimeters (about 0.0004 inches to about 0.079 inches), for example, about 0.35 millimeters to about 0.45 millimeters (about 0.014 inches to about 0.018 inches), for example, about 0.41 millimeters (about 0.016 inches) (FIGS. 3 and 4). A diameter of the pores 32 in the porous material 24 can be about 0.02 micrometer to about 5 micrometers (about 7.87e-7 inches to about 0.0002 inches), for example, about 0.02 micrometers to about 0.5 micrometers (about 7.87e-7 inches to about 1.97e-5 inches), for example, about 0.05 micrometers (about 1.97e-6 inches). Pore size can vary widely and can be tailored to accommodate various liquid amines.

The layer of porous material 24 can be bonded over the substrate 12 via, for example, suspension polymerization. The layer of porous material 24 can also be welded to the substrate 12. Additionally, or alternatively, the filtration structure 10 can further comprise a layer of adhesive 34 between the substrate 12 and the layer of porous material 24 (FIG. 4).

A liquid amine can be retained within the pores 32 of the porous material 24. For example, the liquid amines can be branched, linear, or combinations thereof. The liquid amine can be retained within the pores 32 via capillary forces. A density of liquid amine in the filtration structure 10 can be about 0.25 milliliters to about 0.5 milliliters per cubic centimeter of the filtration structure 10 (i.e., about 25% to about 50% of a total filtration structure volume can be occupied by liquid amine), for example, about 0.3 milliliters to about 0.4 milliliters per cubic centimeter of the filtration structure 10 (i.e., about 30% to about 40% of a total filtration structure volume can be occupied by liquid amine), for example, about 0.37 milliliters per cubic centimeter of the filtration structure 10 (i.e., about 37% of a total filtration structure volume can be occupied by liquid amine).

A carbon dioxide scrubber 36 can comprise the filtration structure 10 described herein. For example, the filtration structure 10 disclosed herein for use in carbon dioxide scrubbers 36 can be used to treat exhaust gases from industrial plants or from exhaled air in life support systems such as rebreathers or in spacecraft, submersible craft or airtight chambers. The carbon dioxide scrubbers 36 disclosed herein can also be used in controlled atmosphere storage and carbon capture as a means of combating global warming. The carbon dioxide scrubbers 36 disclosed herein can also be used for removal of carbon dioxide from the exhaust of coal and gas-fired power plants.

The filtration structure 10 disclosed herein for use in carbon dioxide scrubbers 36 can improve thermal linkage between absorption and desorption beds, improve ventilation and overall efficiency, increases gas/amine contact surface area and cyclic capacity, and reduces pressure drop, power usage, total structural mass, and vacuum desorption pressures. For example, due to the monolithic design of the filtration structure and the improvements described above, the carbon dioxide scrubber 36 disclosed herein can operate successfully without a retention screen. Elimination of the retention screen significantly reduces pressure drop, for example, during desorption phase, thus allowing for more efficient desorption.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components (and encompasses "consist(s) of', "consisting of', "consist(s) essentially of' and "consisting essentially of'), but do not necessarily preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A filtration structure, comprising:
a substrate (12), wherein the substrate is a three-dimensional lattice formed from repeating geometric shapes (14);
a layer of porous material (24) bonded over the substrate; and
a liquid amine retained within the pores of the porous material.

2. The filtration structure of Claim 1, wherein the substrate is a single monolithic structure.

3. The filtration structure of Claims 1 or 2, wherein the substrate comprises passages for the fluid flow of gas, liquid, or combinations thereof, and preferably wherein a diameter of the passages for the fluid flow of gas is about 0.55 millimeters to about 0.65 millimeters.

4. The filtration structure of any preceding Claim, wherein the substrate comprises a conductive material, and preferably wherein the substrate comprises aluminum, aluminum alloy, copper, copper alloy, silver, gold, stainless steel, or combinations thereof.

5. The filtration structure of any preceding Claim, wherein the repeating geometric shapes are polyhedral, rectangular, elliptical, triangular, annular, honeycombs, or combinations thereof.

6. The filtration structure of any preceding Claim, wherein a thickness of the substrate is about 0.025 millimeters to about 0.25 millimeters.

7. The filtration structure of any preceding Claim, wherein the layer of porous material comprises polymer, silica gel, alumina, zeolites, carbon, or combinations thereof, and preferably wherein the layer of porous material comprises polytetrafluoroethylene, polyvinylidene fluoride, polyethersulphone, poly(methyl methacrylate), polystyrene, polyethylene, pyrolyzed polyacrylonitrile, or combinations thereof.

8. The filtration structure of any preceding Claim, wherein a thickness of the layer of porous material is about 0.01 millimeters to about 2 millimeters.; and/or
wherein a diameter of the pores in the porous material is about 0.02 micrometer to about 5 micrometers.

9. The filtration structure of any preceding Claim, wherein the layer of porous material is bonded over the substrate via suspension polymerization, welded to the substrate, or combinations thereof.

10. The filtration structure of any preceding Claim, further comprising a layer of adhesive between the substrate and the layer of porous material.

11. The filtration structure of any preceding Claim, wherein the liquid amines are branched, linear, or combinations thereof; and/or
wherein a density of liquid amine in the filtration structure is about 0.25 milliliters to about 0.5 milliliters per cubic centimeter of the filtration structure.

12. The filtration structure of any preceding Claim, wherein the substrate is formed via extrusion.

13. The filtration structure of any preceding Claim, further comprising a parting sheet which partitions the filtration structure into two or more beds.

14. A carbon dioxide scrubber comprising the filtration structure of Claim 1.

15. The carbon dioxide scrubber of Claim 14, wherein the carbon dioxide scrubber does not comprise a retention screen.
